Europäisches Patentamt

European Patent Office

Office européen des brevets

(19)

(11) Publication number: **0 225 305 B1**

# EUROPEAN PATENT SPECIFICATION

(45) Date of publication of patent specification: **07.08.91**    (51) Int. Cl.⁵: **F16L 37/14, F16L 21/08**

(21) Application number: **86850411.9**

(22) Date of filing: **27.11.86**

(54) Pipe connector device.

(30) Priority: **02.12.85 SE 8505685**

(43) Date of publication of application:
**10.06.87 Bulletin 87/24**

(45) Publication of the grant of the patent:
**07.08.91 Bulletin 91/32**

(84) Designated Contracting States:
**AT BE CH DE ES FR GB GR IT LI NL SE**

(56) References cited:
**US-A- 3 973 791
US-A- 4 431 218**

**Standard Handbook of Fastening and Joining, p. 4-50**

(73) Proprietor: **Westman, Stig
Räfsvägen 22
S-740 40 Heby(SE)**

(72) Inventor: **Westman, Stig
Räfsvägen 22
S-740 40 Heby(SE)**

(74) Representative: **Bjellman, Lennart Olov Henrik et al
DR. LUDWIG BRANN PATENTBYRA AB Drottninggatan 7 Box 1344
S-751 43 Uppsala(SE)**

EP 0 225 305 B1

## Description

The present invention relates to pipes, and more particular to a joint for connecting pipes, whereby the actual pipe connection is carried out fast, simply and provides a sealed and reliable connection of individual pipes to long pipe lines.

Connecting individual pipes or pieces of pipes into longer pipe lines can be realized in different ways and many techniques are known. The present invention concerns in particular, but not exclusively, coarse pipes of the type being part of for example municipal water supply and sewer systems, pipe lines for gases and liquids, and similar. One area in which the present invention has a more particular application, is the so called relining of leaking or otherwise defective pipe lines. Relining means that new piping is inserted in an existing pipe line.

The invention will be described in the following with reference to the latter area, that is relining, but for a person skilled in the art the present invention is by no means limited to this technical area, but can be utilized for a variety of pipe lines, as well as for new laying of such pipes.

## BACKGROUND OF THE INVENTION

It is a well known problem that pipe line systems, which are being used for water supply and sewers particularly within densely populated areas, leak. It is therefore not uncommon that 20 - 30 % of the drinking water disappears on its way to the consumers. This means that drinking water disappears to no avail. This could sometimes lead to damages, since drinking water that is leaking could penetrate into damaged sewer pipes and there increase the amount of discharge water, which the purifying plants then have to treat, as well as lead to direct erosion damages.

As far as damaged sewer pipes are concerned, such pipes are not only a risk for polluted discharge water to leak out and pollute the environment, but also that large amounts of water, such as ground water, drinking water that is leaking out and similar, can penetrate into the sewer pipes. This whole amount of water will then be treated as discharge water in the purifying plants, as indicated above, which would bring about treating problems as well as high costs.

There are therefore both environmental and economical reasons to do someting about damages in water supply and sewer pipes. It is desirable that this could be done in a simple and inexpensive way. In most cases, however, the pipe line systems are laid in the ground preferably under streets and roads, but also under buildings, which makes the pipe line systems not easily accessible to repair work.

There are systems developed for the repair of minor, single damages, such as cracks, leaking joints and similar. The equipment used for these systems allows for repair where the starting-out point is manholes or similar, and digging up the ground is not required for access to the damaged points.

Such a system comprises a hose-like bellows, which by means of an insertion device can be moved through an existing pipe line to the point where the damage is, whereby the determination of the damage and the correct location of the repair bellows takes place by means of conventional video supervision.

For the renewal of longer stretches there are long insertion pipes, so called relining pipes, which are inserted in the existing pipe lines. In order for them to be inserted into these existing pipes, there is the requirement of digging up the ground, and each direction change in the existing pipe line makes new digging necessary.

Digging up the ground is a big problem. It is expensive to dig and there are risks involved to other pipes that might be laid in the pipe ditch. The damage may not be at the expected point, which will result in more extensive digging than was estimated. Digging up streets and roads will also affect traffic, so that traffic would have to be detoured, which is not always an easy case.

Flexible pipes, which could be led in through manholes or similar, would be possible to consider. Such a structure with a sufficient strength for those pressures, both prevailing ground pressure and pipe line pressure, has not yet been developed, which in addition has a long life span as well as a cost, which could make its use economically justified.

No matter what type of pipes, which are used for the relining and similar purposes, the problem lies with the joints. In order to achieve the best possible flow through the relining pipe, the cross-sectional surface thereof has to be as big as possible. In order to achieve this, the relining pipe has to fill up most of the available space in the existing pipe, that is the outer wall of the relining pipe has to be as close as possible to the inner wall of the existing pipe. This means that there must not be any portions, such as bell-shaped configurations at the joints, projecting outward from the relining pipe, which is commonplace for many types of pipes. Nor must there be any portions projecting inward into the relining pipe, since such portions would decrease the flow surface of the pipe as well as form flow obstacles, which could cause clogging of the pipe line by the materials in the media transported through the pipe line. It is therefore important that the pipe line, which is composed by relining pipes, is as smooth as possible both inside and outside. Moreover it is important that the pipe joints, besides staying sealed even during long periods of use, are inexpensive to manufacture, have a simple and reliable function and to the largest possible extent fall within the material thickness for pipe walls.

From "Standard Handbook of Fastening and Joining" of 1979, P.4-50, there is known a joint comprising tapered male and female ends on pipes to be joined. However, in this known joint, the sealing is based upon the accurately machining of the cooperating surfaces and the retaining is based upon the friction between the cooperating surfaces. In case two adjacent pipes are subjected to bending forces there is a great risk that at least the sealing of the joint is destroyed and also that the pipes are separated from each other. Further, a joint of this type does not allow any slight angularity between two adjacent pipes.

The objective of the present invention is to eliminate the above problems and to meet said requirement of an inexpensive and simple solution. This is attained by a joint of the kind which is indicated in the claims, wherein there are also indicated those features which in particular characterize the invention.

## BRIEF DESCRIPTION OF THE DRAWINGS

The invention will now be further described in more detail in conjunction with the accompanying drawings, in which

Fig. I is a broken-away, partly sectional side view with certain sectional parts showing a connection carried out by means of the embodiment of the invention,

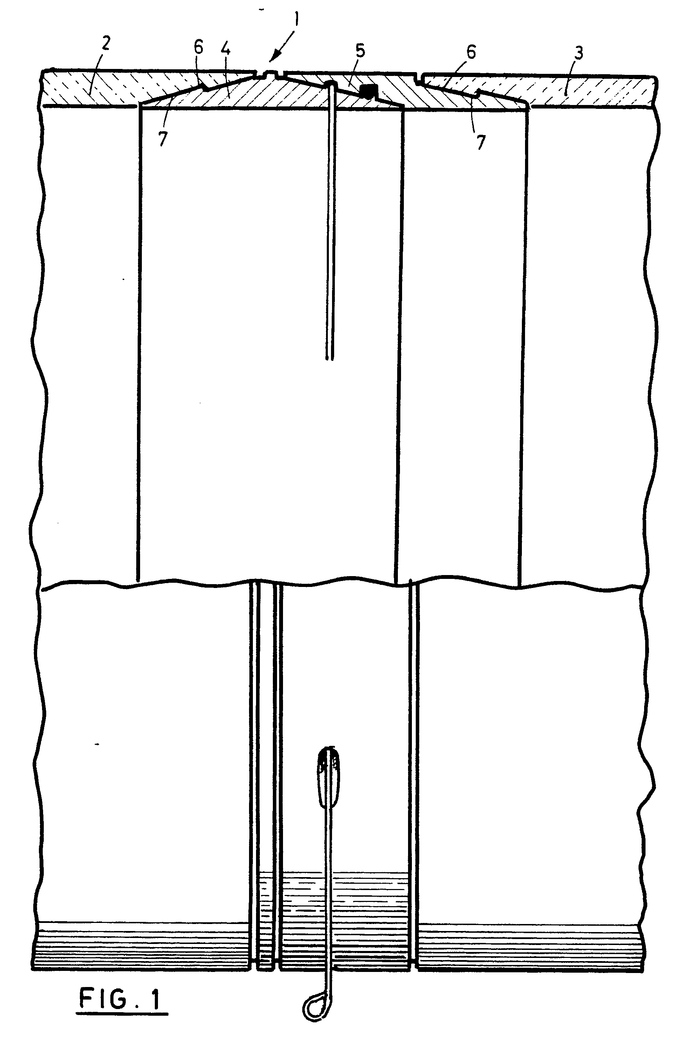

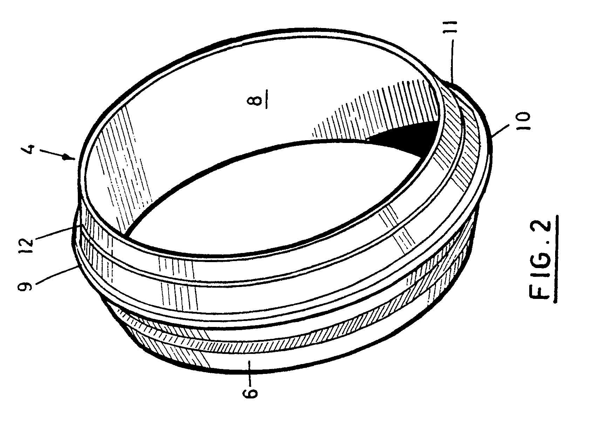

Fig. 2 is a perspective view showing the male part employed in fig. I of the embodiment of the invention,

Fig. 3 is a perspective view showing the female part employed in fig. I of the embodiment of the invention,

Fig. 4 is a broken-away section of a joint according to a second embodiment of the invention, and

Fig. 5 is a broken-away section of a joint according to a third embodiment of the invention.

## DESCRIPTION OF THE PREFERRED EMBODIMENTS

A first embodiment of the joint I according to this invention is shown in figs. I - 3. With reference to fig. I the device is used for connecting two pipes 2, 3, which are made of for example a plastic material. Joint I consists of a male part 4 and a female part 5, which both have a barb-like portion 6, which is received in a complementary portion 7 within each pipe 2, 3. The male and female parts 4, 5 are advantageously made of steel, preferably of stainless steel. It is therefore the elasticity of the pipes 2, 3 that allows for the engagement between the pipes and the parts 4, 5. If the material of the pipes 2, 3 lacks sufficient elasticity for the engagement, the elasticity could be improved by heating. Otherwise the joint I has to be realized directly in the pipes 2, 3. Such an embodiment will be described further below.

Referring to figs. I - 3, with this embodiment of the invention the male part 4 has a smooth, cylindrical inner surface 8 having a diameter, which is basically the same as the one of the pipe 2, to which the male part 4 is to be connected, so that there is formed a substantially smooth inner surface even past the joints. The barb-like fastening portion 6 is axially separated from the rest of the male part 4 by an outer circular rim 9. This rim has an outer diameter, which is basically the same as the one of the pipe, to which the male part 4 is to be connected, so that the pipe line outer diameter will be substantially smooth at the joint. This is of importance when it is desirable that the relining pipes be as wide as possible in the existing pipes. The slit between the inner diameter of the existing pipe and the outer diameter of the new pipe, then has to be as small as possible.

The rim 9 has a wall 10, which is basically radial and turned away from the barb-like fastening portion, and from this wall a conical portion II extends, which has a decreasing outer diameter. Approximately in the middle, viewed axially, of this conical portion II, there is a notch 12 extending circumferentially.

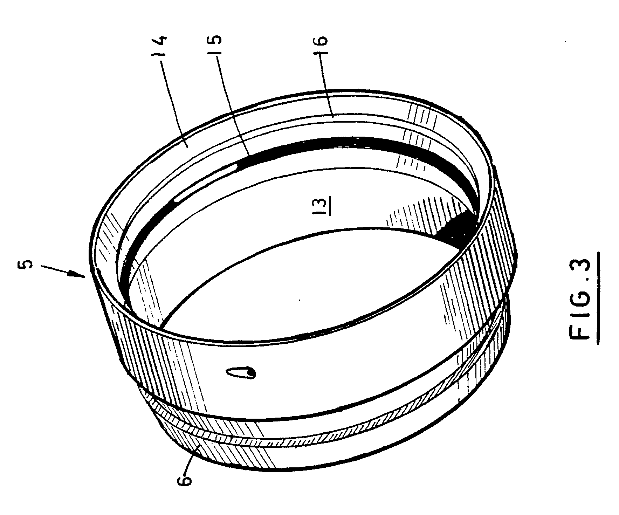

With special reference to fig. 3, the female part 5 has a form, which is complementary to the male part 4 and comprises, inside of the barb-like fastening portion 6, a smooth, cylindrical inner surface 13 having the same diameter as the one of the inner surface 8 in the male part 4, and a conical portion 14, which extends from said fastening portion, having an increasing diameter and with basically the same conicity as the one of the conical portion II. A seal ring 15, preferably a so called O-ring, is positioned in a groove in the conical portion 14 near the area of transition of the conical portion into the cylindrical inner surface 13. Between the seal ring and the free end of the conical portion, there is a groove 16 extending around its inner circumference. There is a hole 17 provided extending from the outside of the female part 5 and into the groove 16, the hole 17 having such an extension that it merges tangentially with the groove 16.

In the embodiment of the joint according to the invention, shown in figs. I - 3, the barb-like fastening portions 6 are adapted to engage with the inside of the pipes, which are to be jointed. For the artisan, however, it is obvious that these parts as well could be adapted to be engaged with the outside of the pipes, which are to be jointed.

The so far described joint I of the invention is shown assembled in fig. I in conjunction with two pipes 2, 3. The barb-like fastening portions 6 are engaged with the complementary portions 7 in the pipes, and the male and female parts 4, 5 of the connector device are connected. A steel thread I8, preferably of stainless steel, is run through the hole I7 and through the canal formed by the two opposite grooves I2, I6. The steel thread I8 has a diameter which is larger than the depth of an individual groove I2, I6. This means that, once the male and female parts 4, 5 are connected to a predetermined position with respect to each other, the grooves I2, I6 are positioned just opposite one of the other, and the steel thread I8 can be run through the canal formed thereby. Thus, the parts 4, 5 are locked in their connected relationship, as shown in the figure. Little motion between the parts is allowed depending on the difference in diameter of the joint thread I8 and in size of the canal formed by the grooves I2, I6.

Due to the conicity, the male part 4, when being inserted in the female part 5, does not come in contact with the seal ring I5 until at a very late stage. Therefore, there is no risk for the seal ring to roll out from its groove, which might be the case, if the interacting surfaces II, I4 of the male and female parts 4, 5 were cylindrical or close to cylindrical.

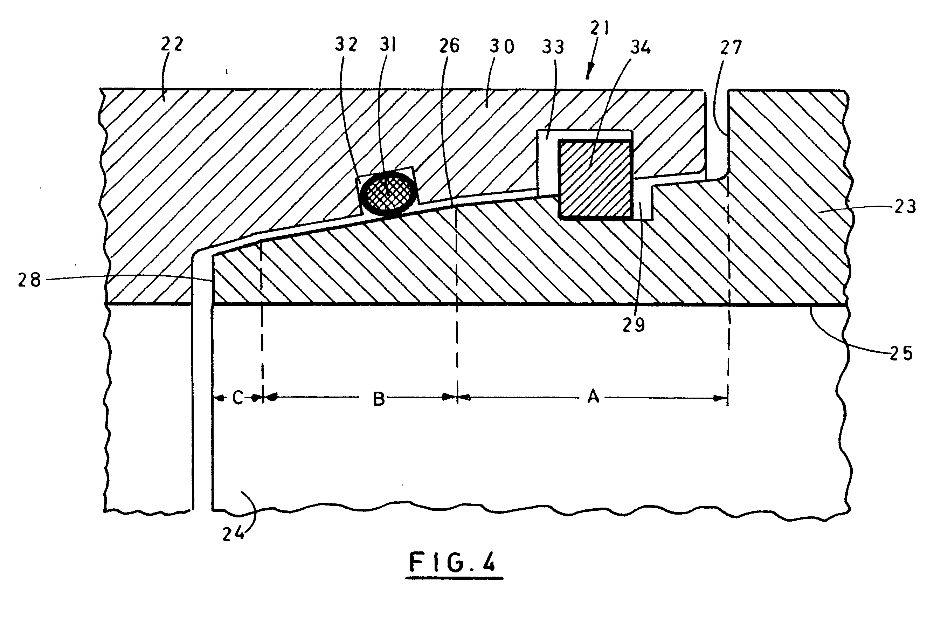

In fig. 4 there is shown a section of an alternative embodiment of the joint according to the invention. This joint 2I is realized directly in those pipes 22, 23 that are to be connected one to another, and can to a certain degree be compared with conventional joints having tip and sleeve ends. As previously mentioned, there are several problems associated with a joint of that kind. A joint should therefore not have any parts projecting either outwardly or inwardly, since in the case of relining, the inner diameter of the old outer pipe limits the size of the relining pipe, it is desirable that the latter be kept as big as possible, so that it can allow for a passage of as big of an amount of a gas or a liquid as possible, and on the other hand inwardly projecting parts are a flow obstacle. The joints should be sealed, yet allow for a small angular adjustment and, last but not least, they should allow for an easy, safe and fast connection of the individual pipes down in manholes and at other narrow and almost inaccessible places.

It is very common that with this type of pipe joints having seal rings of the O-ring type, the O-rings during the assembly of the pipes roll out from their grooves, or in one or the other way are displaced, so that the joints won't be sealed. This has been solved by the present invention providing the conicity of the joint pieces, which has been described in conjunction with the first embodiment.

A successful test was made where the joint was used with PVC-pipes, utilizing the embodiment shown in fig. 4. The PVC-pipes 22, 23 had an outer diameter of 200 millimeters and a material thickness of 6 millimeters. The joint itself had a length of 25 millimeters.

The male part 24 had the structure shown in fig. 4 with a smooth inside 25 being the direct extension of the inside of the pipe 23 and with an outside 26, which was stepwise and conically decreasing from a substantially in radial direction inward step 27 to the substantially radial end surface 28. From the end surface 28 to the step 27, the male part 24 thus had an axial length of approximately 25 millimeters.

Outwardly from step 27, there was a conical portion A having a conicity of approx. 6° and a length of approx. I3 millimeters. Approximately in the middle of this portion, there was a substantially rectangular groove 29 extending around the outer circumference of the male part 24. After the conical portion A, there was a second conical portion B having a conicity of 8 - I0° and a length of approx. I0 millimeters. From this portion B and to the end surface 28, there was a third conical portion C having a conicity of approx. I6° and a length of approx. 2 millimeters.

The female part 30 was of a complementary design with respect to the male part 24, so that the outside 26 of the male part 24 and the inner surface of the female part 30, with the joint completely pushed together, will be in a direct engagement with each other. A seal ring 3I in the form of a O-ring was positioned in a groove 32 in the inner surface of the female part 30 in the portion, which corresponds to the conical portion B of the male part 24. The groove 32 had a width of between 2 and 3 millimeters.

In the female part 30, there is a further groove 33 having a substantially rectangular cross section, with the joint completely pushed together directly across from the groove 29 in the male part 24. The grooves 29 and 33 form av circular canal having a rectangular cross section, and a hole, not shown, which extends from the outside of the female part 30 into this groove. In the purpose of keeping the pipes 22, 23 together, a rectangular thread 34 is inserted in the canal 29, 33.

In an assembled state, as shown in fig. 4, the thread 34 is basically as high as the canal, which is formed by the opposite grooves 29, 33, but it is somewhat narrower than the length of this canal. This results in a certain play between the male and female parts 24, 30. If the thread 34 is of the same width as the canal, there won't be any play. A play can be desirable to allow for a small adjustment of two adjacent pipes relative to each other and to allow for such displacements, that depend on temperature. If the joint is completely pushed together with engagement between the surfaces of the male part 24 and the female part 30 and locked in this position by means of a thread 34, which completely fills up the width of the canal comprised by the grooves l0, 33, expansion damages may occur on the joint pieces, if temperature rises in the pipe line.

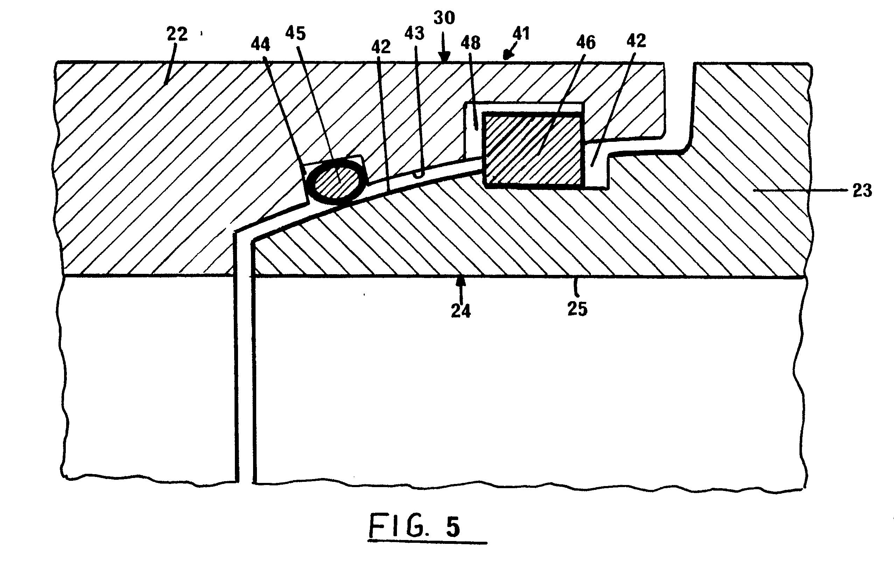

Another embodiment of the joint according to the invention is shown in fig. 5. This joint 4l corresponds in principle to previously described joints, and only relevant parts of this embodiment will therefore be described more in detail.

One of the pipes 22 is provided with a female part 30 and the other pipe 23 with a male part 24. The male part 24 has a smooth inside 25, which is the direct extension of the inside of the pipe, and this smooth inside continues directly in the next pipe 22. The joint will therefore not affect the flow passage surface of the pipe line. In the same way the outside of the pipes 22, 23 is completely smooth at the joint, this joint being in all parts within the material thickness of the pipes 22, 23.

What is special about this embodiment is that the outward surface 42 of the male part 24, as well as the inward surface 43 of the female part 30, are curved or arched, these surfaces being substantially complementary when viewed longitudinally according to fig. 5. The curvature is preferably in the form of a circular arc. Thus, the joint will be belled or ball-shaped, which allows for a small angular adjustment between the two connected pieces 22, 23, without any impact on the sealing effect between a seal ring 45, which is located in a groove 44 in the female part 30, and the outward surface 42 of the male part 24.

For the purpose of holding the two pipes 22, 23 in place, as in the case of previously described embodiments, a lock thread or a lock strip 46, in this case of a rectangular cross section, is inserted in a canal comprised by two opposite grooves, one groove 47 extending around the outward surface 42 of the male part 24 and one groove 48 extending around the inward surface 43 of the female part 30. The canal 47, 48 has a width that is somewhat larger than the width of the lock thread 46, so that a small play exists in the joint. This play then allows for said angular adjustment between the connected pipes. The play can amount to l - 2°. The bell or ball-shape of the joint makes in addition, with this angular adjustment, a rupture non-existent in the joint.

Pipes provided with joints according to the present invention are assembled in the following way when being used for relining:

The pipes 2, 3, 22, 23, which are provided with male and female parts 4, 5, 24, 30 that are either integrated with the pipes or in the form of separate elements, have a length of approx. 60 centimeters and, in any case, are not longer than that they can be lowered down into, and without diametrically obstructing the manhole. There, a worker inserts a first pipe 2, 3, 22, 23, initially with the male part 4, 24 of the connector device l, 2l, into the pipe line that is to be repaired. The female part 5, 30 is not pushed into the pipe line, but remains to begin with in the manhole. The male part 4, 24 on the subsequent pipe is fit into the female part 5, 30, the form of which, whether it is constant or variably conical or bell-shaped, makes the male part 4, 24 come into engagement with the seal ring l5, 3l, 45 not until the very last stage of the assembly. By having in particular the seal ring l5, 3l, 45 greased with lubrication or soap, the ring slides against the outside ll, 26, 42 of the male part 4, 24 without rolling out of its groove, and yet should it start to roll, the distance would only amount to some millimeters, which is not far enough for the seal ring to roll out of its groove.

How hard the joint l, 2l, 4l should be tightened, is determined both by whether the pipe line, which is to be repaired, runs straight or in curves, and whether there are temperature changes in the liquid or possibly gas, which is to be transported through the pipe line. If the pipe line is basically straight and if the temperature fluctuations are small, there is no reason not to make the joint stiff. The lock thread l8, 34, 46 is then selected, so that it will fill up the whole canal, which is formed by the opposite groves l2, l6, 29, 33, 47, 48. If the case is different an appropriate, narrower lock thred is selected. As soon as this thread is run into the hole in the female part 5, 30 and essentially all around the circumference, the joint l, 2l, 4l is fixedly secured and the next pipe can be connected. Should it be hard to insert the connected pipes, a special insertion device could be used.

When a sufficient length of relining pipes is in position, the ends thereof are sealed against the existing pipe line, for example in conjunction with a couple of manholes, by means of such previously mentioned, hose-like bellows, or similar equipment.

The joints shown in the drawings have an exaggerated play between the male and female parts. In reality, these parts are, as mentioned above, approximately 25 millimeters for pipes having a diameter of 200 millimeters. That means that the play is at most approx. l millimeter, where the play is biggest, thus a play which is easily bridged by a sealing of the O-ring type.

It is evident to a person skilled in the art that the present invention provides a joint, which is simply realized and nevertheless provides both a sealed and a solid joint. In addition it is inexpensive to manufacture and fast and simple to assemble. With other words, the device very well fulfils the initially mentioned purposes.

**Claims**

1. Joint for connecting individual pipes to pipe lines, including a male part (4, 24) at one end of each pipe (2, 3, 22, 23) and a female part (5, 30) at the other end thereof, the parts (4, 24, 5, 30) being given a substantially complementary design to fit into each other, the male part (4, 24) comprising an end portion (11, 26) having a decreasing outer diameter towards the adjacent end (28) of the pipe (2, 23), and the female part (5, 30) comprising an end portion (14) having an increasing inner diameter towards the adjacent end of the pipe (2, 23), **characterized** in that said end portions (11, 26, 14) have a circumferentially extending groove (12, 16, 29, 33, 47, 48), which, when the male part (4, 24) is inserted to a predetermined position in the female part (5, 30), overlap each other and form a canal for the reception of a lock thread (18, 34, 46), a hole (17) being made through the wall of the sealing part (5, 30) for the insertion of the lock thread (18, 34, 46) into said canal, and that at least one seal ring (15, 31) is provided within the area between the lock grooves (12, 16, 29, 33, 47, 48) and the free end (28) of the male part (4, 24).

2. Joint according to claim 1, **characterized** in that the end portions (1, 14, 26) are divided into at least two portions (A, B, C) of a different conicity.

3. Joint according to claim 1, **characterized** in that the end portions (11, 14, 26) are bell or ball-shaped.

4. Joint according to any of the preceding claims, **characterized** in that the overlapping grooves (29, 33, 47, 48) cross-sectionally are substantially rectangular for receiving a lock thread (34, 46) which in cross section is substantially rectangular.

5. Joint as claimed in any of the preceding claims, **characterized** in that the seal ring or rings (15, 31, 45) are located in grooves (32, 44) in the end portion (14) of the female part (5, 30).

6. Joint as claimed in any of the preceding claims, **characterized** in that both the male (4) and the female (5) part are comprised by separate elements, which are provided with means for the fastening of the pipes.

**Revendications**

1. Raccord de connexion de tuyaux individuels à des canalisations, comprenant une partie mâle (4,24) à une extrémité de chaque tuyau (2,2,22,23) et une partie femelle (5,30) à son autre extrémité, les parties (4,24,5,30) étant conçues de façon sensiblement complémentaire pour s'ajuster l'une dans l'autre, la partie mâle (4,24) comprenant une partie terminale (11,26) possédant un diamètre extérieur décroissant vers l'extrémité adjacente (28) du tuyau (2,23), et la partie femelle (5,30) comportant une partie terminale (14) présentant un diamètre intérieur croissant vers l'extrémité adjacente du tuyau (2,23), caractérisé en ce que lesdites parties terminales (11,26,14) possèdent une gorge circonférentielle (12,16,29,33,47,48), qui, lorsque la partie mâle (4,24) est introduite en une position prédéterminée dans la partie femelle (5,30), se recouvrent mutuellement et forment un canal pour la réception d'un jonc de blocage (18,34,46) un trou (17) étant pratiqué à travers la paroi de la partie d'étanchéité (5,30) pour l'introduction du jonc de blocage (18,34,46) dans ledit canal, et en ce qu'au moins une bague d'étanchéité (15,31) est prévue à l'intérieur de la zone entre les gorges de blocage (12,16,29,33,47,48) et l'extrémité libre (28) de la partie mâle (4,24).

2. Raccord selon la revendication 1, caractérisé en ce que les parties terminales (1,14,26) sont divisées an au moins deux parties (A,B,C) de conicité différente.

3. Raccord selon la revendication 1, caractérisé en ce que les parties terminales (11,14,26) sont en forme de cloche ou de sphère.

4. Raccord selon l'une quelconque des revendications précédentes, caractérisé en ce que les gorges se recouvrant (29,33,47,48) sont de section sensiblement rectangulaire afin de recevoir un jonc de blocage (34,46) qui, en coupe, est sensiblement rectangulaire.

5. Raccord selon l'une quelconque des revendications précédentes, caractérisé en ce que la ou les bague(s) d'é tanchéité (15, 31,45) sont disposée(s) dans des gorges (32, 44) dans la partie terminale (14) de la partie femelle (5, 30).

6. Raccord selon l'une quelconque des revendications précédentes, caractérisé en ce que les deux Parties mâle (4) et femelle (5) sont constituées d'éléments distincts, qui sont pourvus de moyens de fixation des tuyaux.

## Patentansprüche

1. Einrichtung zur Verbindung einzelner Rohre zu Rohrleitungen, mit einem Spitzende (4,24) an einem Ende jeden Rohres (2,3,22,23) und einem Muffenende (5,30) am anderen Ende, wobei die Enden (4,24,5,30) eine im wesentlichen komplementäre Form für ein gegenseitiges Einpassen aufweisen, wobei das Spitzende (4.24) einen Endbereich (11,26) mit zum benachbarten Ende (28) des Rohres (2.23) abnehmendem Außendurchmesser und das Muffenende (5,30) einen Endbereich (14) mit zum benachbarten Ende des Rohres (2.23) zunehmendem Innendurchmesser aufweist, dadurch gekennzeichnet, daß die Endbereiche (11,26,14) eine am Umfang verlaufende Nut. (12,16,29,33,47,48) aufweisen, welche beim Einsetzen des Spitzendes (4,24) in eine vorbestimmte Position Im Muffenende (5,30) einander überlappen und einen Kanal zur Aufnahme eines Verriegelungselementes bzw. -drahtes (18,34,46) ausbilden, wobei durch die Wand des Abdichtteils (5,30) eine Öffnung (17) zum Einführen des Verriegelungsele-mentes (18,34,46) In den Kanal ausgebildet ist, und daß wenigstens ein Dichtring (15,31) in dem Bereich zwichen den Verriegelungsnuten (12,16,29,33,47,48) und dem Freien Ende (28) des Sptizendes (4,24) vorgesehen ist.

2. Einrichtung nach Anspruch 1, dadurch gekennzeichnet, daß die Endbereiche (11,14,26) in wenigstens zwei Bereiche (A,B,C) unterscheidlicher Konizität unterteilt sind.

3. Einrichtung nach Anspruch 1, dadurch gekennzeichnet, daß die Endbereiche (11, 14, 26) glocken- oder kugelförmig bzw. ballig ausgebildet sind.

4. Einrichtung nach einem der vorangehenden Ansprüche, dadurch gekennzeichnet, daß die überlappenden Nuten (29, ·33, 47, 48) im Querschnitt im wesentlichen rechteckig zur Aufnahme eines Verriegelungselementes bzw. -drahtee (34, 46), welches(r) im Querschnitt im wesentlichen rechteckig ist, ausgebildet sind.

5. Einrichtung nach einem der vorangehenden Ansprüche, dadurch gekennzeichnet, daß der Dichtring oder die Dichtringe (15,31,45) in Nuten (32,44) im Endbereich (14) des Muffenendes (5,30) angeordnet ist (sind).

6. Einrichtung nach einem der vorangehenden Ansprüche, dadurch gekennzeichnet, daß sowohl das Spitzende (4) als auch das Muffenende (5) an getrennten Elementen vorgesehen sind, welche mit Mitteln zur Befestigung an den Rohren ausgebildet sind.

FIG . 1

FIG.2

EP 0 225 305 B1

FIG. 3

FIG. 4

11

FIG. 5

EP 0 225 305 B1